# EUROPEAN PATENT SPECIFICATION

(11) **EP 2 233 904 B1**
(45) Date of publication and mention of the grant of the patent: **20.06.2012**
(21) Application number: 09004278.9
(22) Date of filing: 25.03.2009
(51) Int. Cl.: G01M 1/12

(54) **Arrangement to determine a static moment of a blade**
Anordnung zur Bestimmung des statischen Moments einer Klinge
Agencement pour déterminer le moment statique d'une pale

(43) Date of publication of application: 29.09.2010
(73) Proprietor: Siemens Aktiengesellschaft, 80333 München (DE)
(72) Inventor: Pedersen, David, Stien, 9000 Aalborg (DK)

(56) References cited:
- GB-A- 557 434
- US-A- 2 203 782
- US-A- 5 824 897

## Description

The invention relates to an arrangement to determine a static moment of a blade, especially of a wind-turbine-blade.

A wind-turbine rotor has to be balanced to ensure the lifetime of the wind-turbine. For this each blade, which has to be mounted on a hub of the rotor, has to affect the hub with the same gravity-moment or static-moment.

If the blades differ in their static-moments the wind turbine is affected by the rotating blades irregular. Instabilities result in extraordinary wear of wind-turbine-components. Over time cracks may occur on the rotor, the nacelle, the tower, the bearing and also to other primary components of the wind turbine because of the unbalanced mass of the rotating blades. In worst case the lifetime of the wind-turbine is reduced by the unbalanced rotor.

If the blades do not show the same gravity- or static-moment small weights are added to the blades to establish an equilibrium. Usually the weights are located and fixed inside the blades.

The static-moment of a wind-turbine-blade can be determined by weighing the blade, where two scales are used. A first scale is placed at the root-end of the blade and a second scale is placed at the tip-end of the blade.

For this the blade has to be placed equally and accurately on the two scales. The two scales have to perform the weight-measurement of the huge blade very accurately, so they are very expensive.

The distance between the first and the second scale is measured, while this has to be accurate and within the precision of only a few millimeter. To ensure the accurate distance the weighing-systems are typically fixed by bolts at the floor. This leads to an inflexible weighing-system - so valuable production-area is allocated constantly, even if no blade-weighing needs to be performed.

US 5,824,897 describes a so called "blade static balancing fixture", which is used for accurate station or spanwise measurements of helicopter-rotor-blades.

It is known from US 4 078 422 to measure the static-moment of a rotor blade by supporting and measuring the weight of a rotor blade in at least two positions. Here the same problems as stated above will occur.

It is known from RU 2224 228 to measure the static-moment of a blade by placing the blade on a rocking lever. The rocking lever is balanced in advance. The lever is connected through a force-transmitting rod to a weight measurement device. The static moment of the blade is partially compensated by a force put on the rocking lever. This system needs also great areas, as a long lever is needed around half of the length of the blade.

An exact placement of the blade is needed and this is difficulty to achieve.

It is therefore the aim of the invention, to provide an improved arrangement to determine the static-moment of a blade of a wind-turbine, which allows to determine the static-moment with less expensive efforts.

This problem is solved by the features of claim 1. Preferred embodiments of the invention are subject of the dependent claims.

According to the invention a fixation-unit is used to hold the blade.

The fixation-unit shows a first reference-point, which is used as a center of rotation of the fixation-unit.

The fixation-unit shows a second reference-point, which has a predetermined distance to the first reference-point.

In a preferred embodiment the distance between the two reference-points is equal to a radius of a hub, which is planned to carry the blade later at a wind-turbine-site.

The second reference-point is part of a cross-sectional-area of the fixation-unit, while this area is orthogonal to the longitudinal-axis and while this cross-sectional-area is prepared and used to carry the root-end of the blade.

Because of this arrangement the blade and the fixation-unit can be rotated around the first reference-point.

A third reference-point show a certain distance to the first reference-point. The third reference-point is part of a cross-sectional-area of the blade, which is orthogonal to the longitudinal-axis of the blade. At the position of the third reference-point the weight of the blade is determined.

The distance between the first reference-point and the second reference-point may be measured with a high precision by help of a laser or may be predetermined by help of a hole or marks along a testing-line for example.

The measured weight of the blade is used to calculate the static-moment of the blade with respect to the distance between the first and the third reference-point.

In a preferred embodiment the fixation-unit holds the blade in a horizontal position. In this case the longitudinal-axis of the blade is mainly parallel to the ground.

The fixation-unit is formed as a special bracket, to allow the connection of the root-end of the blade. As stated above this bracket ensures that the root-end of the blade show a distance to the center of rotation, which is equal to the distance from the root-end to the centre of a hub, planned to be used at the wind-turbine.

The invention allows to determine the static-moment of a blade in an easy and cheap manner.

The invention allows to reuse the area, which is needed for the determination of the static-moment, for other purposes as its components can be removed easily when the measurement is done.

The used equipment is flexible and can be used in different environments.

The used equipment can also be used for blades showing different lengths, so a standardized measurement equipment is established.

The equipment allows to be used alternating between different production lines or even to be used at a harbor or directly to be used on a wind-turbine-site.

The invention allows to reduce tolerances in the weighing process as less components are needed compared with the state of the art. Therefore a resulting chain of tolerances are reduced.

The invention is described now in more detail by help of a figure.

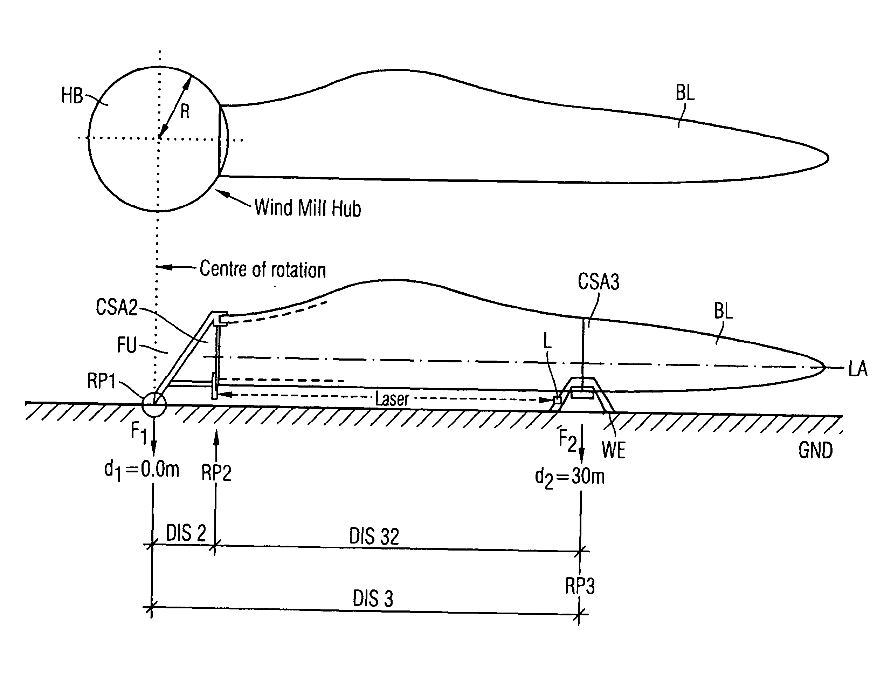

FIG 1 shows the determination of a static-moment of a blade BL according to the invention.

A fixation-unit FU is used to hold the blade BL in a mainly horizontal position. So the longitudinal-axis LA of the blade BL is mainly parallel to the ground GND.

The fixation-unit FU shows a first reference-point RP1, which is used as a center of rotation of the fixation-unit. So the fixation unit FU is mounted pivotable around the first reference-point RP1.

The fixation-unit FU shows a second reference-point RP2, which has a predetermined distance DIS2 to the first reference-point RP1. The distance DIS2 between the two reference-points is equal to a radius R of a hub HB, which is planned to carry the blade BL later at a wind-turbine-site (please refer to the sketch shown in top of FIG 1).

The second reference-point RP2 is part of a cross-sectional-area CSA2 of the fixation-unit FU, while this area CSA2 is orthogonal to the longitudinal-axis LA and while this cross-sectional-area CSA2 is prepared and used to carry the root-end of the blade BL.

Because of this arrangement the blade BL and the fixation-unit FU, which is connected with the blade BL, can be rotated around the first reference-point RP1 by a certain angle.

A third reference-point RP3 show a certain distance DIS3 to the first reference-point RP1. The third reference-point RP3 is part of a cross-sectional-area CSA3 of the blade, which is orthogonal to the longitudinal-axis LA of the blade BL. At the position of the third reference-point RP3 the weight WE of the blade BL is determined by help of a scale.

The distance DIS2 between the first reference-point RP1 and the second reference-point RP2 may be measured with a high precision. This is done by help of a laser or by help of marks or holes along a testing-line for example.

The measured weight WE of the blade BL is used to calculate the static-moment of the blade with respect to the distance DIS3 between the first reference-point RP1 and the third reference-point RP3.

Because the blade BL is supported by the fixation-unit FU as described above, the total static-moment of the blade BL results from a contribution of weights at the first reference-point RP1, at the second reference point RP2 and at the third reference-point RP3.

Each of these weights result in a turning-moment, all of them contributes to the resulting static-moment of the blade BL. A first turning-moment, which is acting at the position of the first reference-point RP1, is "0 Nm" as the distance to the center of rotation is "0 m".

A second turning-moment, which is acting at the position of the second reference-point RP2, needs to be calculated only one time. The moment depends on the distance DIS2 between the first reference-point RP1 and the second reference-point RP2 and on the weight, which is acting at the second reference-point RP2 towards the ground GND.

A third turning-moment, which is acting at the position of the third reference-point RP3, needs to be determined. It depends on the distance DIS3 between the first reference-point RP1 and the third reference-point RP3 and on the weight WE, which is acting at the third reference-point RP3 towards the ground GND. This weight WE is measured by only one scale, while the distance DIS3 is measured directly or is calculated.

For example the distance DIS32 between the second reference-point RP2 and the third-reference-point RP3 is measured with a high accuracy by help of a laser. The needed sender and receiver for this are mounted as components at predetermined positions nearby the reference-points RP2, RP3. The distance DIS2 is known by the scale and shape of the fixation-unit FU. So it is possible to calculate the distance DIS3.

In a preferred embodiment a laser-component is integrated into a leg L of the scale, which is positioned at the third reference-point RP3. In this case another laser-component is located as close as possible to the root-end of the blade BL - as it is shown here.

It is possible to measure the distance DIS3 between the first reference-point RP1, which is used as center of rotation, and the third reference-point RP3 directly as described above. Instead of a laser-measurement it is also possible to lock the centre of rotation RP1 and the position of the scale (at RP3) on the floor by a permanent sign. Or a bracket, which is used to carry the scale, is locked by holes in the floor on a certain position.

In a preferred embodiment the fixation-unit FU and/or the movable scale show wheels to allow the components to be moved to a blade if needed.

## Claims

1. Arrangement to determine a static moment of a blade (BL) of a wind turbine,
- where the blade shows a longitudinal-axis (LA),
- where a root-end of the blade (BL) is connected with a fixation-unit (FU) by help of a shaped connection-area (CSA2) of the fixation-unit (FU),
- where the fixation-unit (FU) shows a first reference-point (RP1), where the fixation-unit (FU) is prepared to pivot around the first reference-point (RP1),
- where the fixation-unit (FU) shows a second reference-point (RP2), which is part of the connection-area (CSA2), where the second reference-point (RP2) has a predetermined first distance (DIS2) to the first reference-point (RP1),
- where the blade (BL) shows a cross-sectional-area (CSA3), which is orthogonal to the longitudinal-axis (LA) of the blade (BL),
- where the cross-sectional-area (CSA3) of the blade (BL) shows a third reference-point (RP3), which has a certain second distance (DIS3) to the first reference-point (RP1),
- where a scale is arranged to measure the weight (WE) of the blade (BL) at the position of the third reference-point (RP3), while the blade (BL) is connected with the fixation-unit (FU),
- where a scale is arranged to measure the weight (WE) of the fixation unit at the position of the second reference-point (RP2), while the blade (BL) is not connected with the fixation-unit (FU),
- where determination-means are arranged at the second reference point (RP2) to determine a first static-moment of the fixation-unit (FU) without connected blade (BL) in reference to the first distance (DIS2),
- where determination-means are arranged at the third reference point (RP3) to determine a second static-moment of the fixation-unit (FU), which is connected with the blade (BL), in reference to the second distance (DIS3),
- where calculation means are arranged and prepared to calculate the static-moment of the blade (BL) using the determined first static-moment and the determined second static-moment.

2. Arrangement according to claim 1, where the first distance (DIS2) is equal to a radius (R) of a hub (HB), which is planned to carry the blade (BL) later,

3. Arrangement according to claim 1 or 2, where a needed distance to determine the first and/or the second static-moment is measured by help of laser-components.

4. Arrangement according to one of the claims 1 or 3, where the fixation-unit (FU) and/or the scale are movable by wheels to allow them to be moved to a blade (BL) if needed.

## Patentansprüche

1. Anordnung zur Bestimmung eines statischen Moments eines Blattes (BL) einer Windkraftanlage,
- wobei das Blatt eine Längsachse (LA) aufweist,
- wobei ein Fußende des Blattes (BL) mit einer Befestigungseinheit (FU) mit Hilfe einer geformten Verbindungsfläche (CSA2) der Befestigungseinheit (FU) verbunden ist,
- wobei die Befestigungseinheit (FU) einen ersten Referenzpunkt (RP1) aufweist, wobei die Befestigungseinheit (FU) dazu eingerichtet ist, um den ersten Referenzpunkt (RP1) zu schwenken,
- wobei die Befestigungseinheit (FU) einen zweiten Referenzpunkt (RP2) aufweist, welcher Teil der Verbindungsfläche (CSA2) ist, wobei der zweite Referenzpunkt (RP2) einen vorbestimmten ersten Abstand (DIS2) von dem ersten Referenzpunkt (RP1) hat,
- wobei das Blatt (BL) eine Querschnittsfläche (CSA3) aufweist, welche orthogonal zu der Längsachse (LA) des Blattes (BL) ist,
- wobei die Querschnittsfläche (CSA3) des Blattes (BL) einen dritten Referenzpunkt (RP3) aufweist, welcher einen gewissen zweiten Abstand (DIS3) von dem ersten Referenzpunkt (RP1) hat,
- wobei eine Waage dafür eingerichtet ist, das Gewicht (WE) des Blattes (BL) an der Position des dritten Referenzpunktes (RP3) zu messen, während das Blatt (BL) mit der Befestigungseinheit (FU) verbunden ist,
- wobei eine Waage dafür eingerichtet ist, das Gewicht (WE) der Befestigungseinheit an der Position des zweiten Referenzpunktes (RP2) zu messen, während das Blatt (BL) nicht mit der Befestigungseinheit (FU) verbunden ist,
- wobei Bestimmungsmittel an dem zweiten Referenzpunkt (RP2) angeordnet sind, um ein erstes statisches Moment der Befestigungseinheit (FU) ohne ein mit ihr verbundenes Blatt (BL) in Bezug auf den ersten Abstand (DIS2) zu bestimmen,
- wobei Bestimmungsmittel an dem dritten Referenzpunkt (RP3) angeordnet sind, um ein zweites statisches Moment der Befestigungseinheit (FU), welche mit dem Blatt (BL) verbunden ist, in Bezug auf den zweiten Abstand (DIS3) zu bestimmen,
- wobei Berechnungsmittel angeordnet und dafür eingerichtet sind, das statische Moment des Blattes (BL) unter Verwendung des bestimmten ersten statischen Moments und des bestimmten zweiten statischen Moments zu berechnen.

2. Anordnung nach Anspruch 1, wobei der erste Abstand (DIS2) gleich einem Radius (R) einer Nabe (HB) ist, welche dafür vorgesehen ist, später das Blatt (BL) zu tragen.

3. Anordnung nach Anspruch 1 oder Anspruch 2, wobei ein Abstand, der benötigt wird, um das erste und/oder das zweite statische Moment zu bestimmen, mit Hilfe von Laser-Komponenten gemessen wird.

4. Anordnung nach einem der Ansprüche 1 oder 3, wobei die Befestigungseinheit (FU) und/oder die Waage durch Räder beweglich sind, um zu ermöglichen, sie bei Bedarf zu einem Blatt (BL) zu bewegen.

## Revendications

1. Agencement pour déterminer un moment statique d'une pale (BL) d'une éolienne,
- où la pale montre un axe longitudinal (LA),
- où une extrémité d'emplanture de la pale (BL) est connectée avec une unité de fixation (FU) à l'aide d'une superficie de connexion conformée (CSA2) de l'unité de fixation (FU),
- où l'unité de fixation (FU) montre un premier point de référence (RP1), où l'unité de fixation (FU) est préparée pour pivoter autour du premier point de référence (RP1),
- où l'unité de fixation (FU) montre un deuxième point de référence (RP2), qui fait partie de la superficie de connexion (CSA2), où le deuxième point de référence (RP2) a une première distance (DIS2) prédéterminée jusqu'au premier point de référence (RP1),
- où la pale (BL) montre une superficie en coupe transversale (CSA3), qui est orthogonale à l'axe longitudinal (LA) de la pale (BL),
- où la superficie en coupe transversale (CSA3) de la pale (BL) montre un troisième point de référence (RP3), qui a une certaine deuxième distance (DIS3) jusqu'au premier point de référence (RP1),
- où une balance est agencée pour mesurer le poids (WE) de la pale (BL) à la position du troisième point de référence (RP3), tandis que la pale (BL) est connectée avec l'unité de fixation (FU),
- où une balance est agencée pour mesurer le poids (WE) de l'unité de fixation à la position du deuxième point de référence (RP2), tandis que la pale (BL) n'est pas connectée avec l'unité de fixation (FU),
- où un moyen de détermination est agencé au deuxième point de référence (RP2) pour déterminer un premier moment statique de l'unité de fixation (FU) sans pale (BL) connectée en référence à la première distance (DIS2),
- où un moyen de détermination est agencé au troisième point de référence (RP3) pour déterminer un deuxième moment statique de l'unité de fixation (FU), qui est connectée avec la pale (BL), en référence à la deuxième distance (DIS3),
- où un moyen de calcul est agencé et préparé pour calculer le moment statique de la pale (BL) en utilisant le premier moment statique déterminé et le deuxième moment statique déterminé.

2. Agencement selon la revendication 1, où la première distance (DIS2) est égale à un rayon (R) d'un moyeu (HB), qui est prévu pour porter la pale (BL) ultérieurement.

3. Agencement selon la revendication 1 ou 2, où une distance nécessaire pour déterminer le premier et/ou le deuxième moment(s) statique(s) est mesurée à l'aide de composants laser.

4. Agencement selon l'une des revendication 1 ou 3, où l'unité de fixation (FU) et/ou la balance est/sont déplaçable(s) par des roues pour lui/leur permettre d'être déplacée(s) jusqu'à une pale (BL) si nécessaire.
